# EUROPEAN PATENT SPECIFICATION

(11) **EP 2 569 524 B1**
(45) Date of publication and mention of the grant of the patent: **15.07.2015**
(21) Application number: 11724693.4
(22) Date of filing: 09.05.2011
(51) Int. Cl.: F02B 29/04, F02M 25/07, F02B 37/013

(54) **ARRANGEMENT AND METHOD FOR EXHAUST GAS RECIRCULATION AND TURBOCHARGING**
ANORDNUNG UND VERFAHREN FÜR ABGASRÜCKFÜHRUNG UND TURBOLADUNG
DISPOSITIF ET PROCÉDÉ DE RECIRCULATION DES GAZ D'ÉCHAPPEMENT ET SURALIMENTATION PAR TURBOSOUFFLANTE

(30) Priority: 12.05.2010 FI 20105524
(43) Date of publication of application: 20.03.2013
(73) Proprietor: Wärtsilä Finland Oy, 65380 Vaasa (FI)
(72) Inventor: WIK, Christer, FI-65230 Vaasa (FI); RISTIMÄKI, Jyrki, FI-65380 Vaasa (FI)
(74) Representative: Berggren Oy Ab
(86) International application number: PCT/FI2011/050425
(87) International publication number: WO 2011/141631

(56) References cited:
- DE-A1-102008 061 399
- JP-A- 2000 220 480
- JP-A- 2002 332 919
- US-A- 5 657 630

## Description

### Technical field of the invention

The present invention relates to an arrangement for exhaust gas recirculation and turbocharging for an internal combustion engine according to the preamble of claim 1. The present invention also relates to a method for exhaust gas recirculation and turbocharging according to the preamble of claim 19. The internal combustion engine utilises two-stage turbocharging, where part of the exhaust gas is taken from the exhaust gas duct before the turbines of the turbochargers and introduced into the air intake duct between the compressors of the turbochargers.

### Background of the invention

The so called two-stage turbocharging systems, where two turbochargers are connected in series for increased boost pressures have been used only in light-duty vehicles in the past, but are now becoming accepted also for medium speed engines. The reason for introducing two-stage turbocharging systems is to reach lower NOₓ and CO₂-emissions.

Exhaust gas recirculation (EGR) systems, where part of the exhaust gas is directed back to the engine, are used in internal combustion engines to reach lower NOₓ-emissions. An EGR system can be either internal or external. In an internal EGR system part of the exhaust gas is trapped within the cylinder or back-flow from the exhaust gas duct into the combustion chamber is utilised. In an external EGR system exhaust gas is recirculated from the exhaust gas duct into the air intake duct. External EGR systems can be further divided into short-route and long-route systems. In a short-route EGR system the exhaust gas to be recirculated is directed directly from the exhaust gas duct to the air intake duct without going through the turbine or compressor of any turbocharger, whereas in a long-route EGR system the exhaust gas to be recirculated goes first through the turbine of at least one turbocharger before being directed through the compressor of the turbocharger mixed with the charge air. A drawback in the present short-route EGR systems is that a pump is needed to introduce the exhaust gas into the air intake duct, since the intake air pressure is higher than the exhaust pressure. Typically, the pressure difference is around 1 bar at full loads. An alternative for a pump is to increase the exhaust back pressure with a flap, or to increase the pressure before the turbine with for instance a variable geometry turbine, but both solutions lead to lower overall efficiency.

Also systems that combine two-stage turbocharging and an EGR system are known. One such a system is disclosed in Japanese patent application JP 2000220480 A, where the system comprises a low-pressure turbocharger and a high-pressure turbocharger and part of the exhaust gas is taken before the turbine of the high-pressure turbocharger in the exhaust gas duct and directed through an exhaust gas recirculation duct and a control valve to the air intake duct between the compressors of the low- and high-pressure turbochargers. Before entering the compressor of the high-pressure turbocharger, the air-exhaust gas mixture is cooled.

However, the system disclosed in the above mentioned Japanese patent application could not be used in medium-speed diesel engines. Since the recirculated exhaust gas needs to be effectively cooled to reach sufficient NOₓ reduction, sulphuric acid would condensate in the ducts. As a matter of fact, although commonly used in heavy-duty and light-duty vehicles, EGR systems have not been introduced for medium-speed diesel engines due to high sulphur amounts in the commonly used heavy fuel oils.

Documents JP 2000220480 A and US 5657630 A1 disclose related EGR systems for IC engines.

### Summary of the invention

The object of the invention is to provide an improved arrangement and method that allow the use of exhaust gas recirculation and two-stage turbocharging also in internal combustion engines using high sulphur content heavy fuel oils. The characterising features of an arrangement according to the present invention are listed in the characterising part of claim 1 and the characterising features of a method according to the present invention are listed in the characterising part of claim 19.

An arrangement for exhaust gas recirculation and turbocharging for an internal combustion engine according to the present invention comprises an air intake duct, an exhaust gas duct, a first turbocharger comprising a turbine being located in the exhaust gas duct and a compressor being located in the air intake duct, a second turbocharger comprising a turbine being located in the exhaust gas duct upstream from the turbine of the first turbocharger and a compressor being located in the air intake duct downstream from the compressor of the first turbocharger, an exhaust gas recirculation duct having its starting point in the exhaust gas duct upstream from the turbine of the second turbocharger and its end point in the air intake duct between the compressor of the first turbocharger and the compressor of the second turbocharger, a control valve for controlling the amount of exhaust gas to be recirculated, and a cooler for charge air located in the air intake duct between the compressor of the first turbocharger and the compressor of the second turbocharger. The arrangement also comprises a scrubber for cleaning the recirculated exhaust gas before the exhaust gas enters the compressor of the second turbocharger. The term "scrubber" is used here to refer to any kind of device that uses liquid, slurry or dry reagent to remove particulates and/or gases from the exhaust gas.

According to the present invention, the method for exhaust gas recirculation and turbocharging for an internal combustion engine comprising a first turbocharger and a second turbocharger connected in series comprises the steps of directing part of the exhaust gas through the turbine of the second turbocharger and the turbine of the first turbocharger located downstream from the turbine of the second turbocharger, and taking part of the exhaust gas stream upstream from the turbine of the second turbocharger and recirculating it through the compressor of the second turbocharger back to the cylinders of the engine. The exhaust gas being recirculated is cleaned in a scrubber before it is directed into the compressor of the second turbocharger.

Because of the scrubber, sulphuric acids and other impurities can be effectively removed from the recirculated exhaust gas and thus two-stage turbocharging and exhaust gas recirculation can be used also in medium speed diesel engines where fuels with high sulphur content are used. With the arrangement combining two-stage turbocharging and exhaust gas recirculation with a cooler for charge air, very low NOₓ-emissions can be achieved together with high engine efficiency.

According to an embodiment of the present invention, also the recirculated exhaust gas goes through the cooler for charge air.

According to an embodiment of the present invention, the scrubber is integrated with the cooler for charge air and recirculated exhaust gas. According to another embodiment of the present invention, the control valve for controlling the amount of exhaust gas to be recirculated is located in the exhaust gas recirculation duct and the scrubber is located in the duct downstream from the control valve.

According to an embodiment of the present invention, liquid is used in the scrubber to remove particles from the exhaust gas. Preferably, water supersaturation is utilised to allow effective particle removal.

Other features of the embodiments of the present invention are given in the dependent claims.

### Brief description of the drawings

Fig. 1 shows a schematic illustration of a first embodiment of the present invention.
Fig. 2 shows a schematic illustration of a second embodiment of the present invention.
Figs. 3-6 show different scrubber arrangements.

### Detailed description of the invention

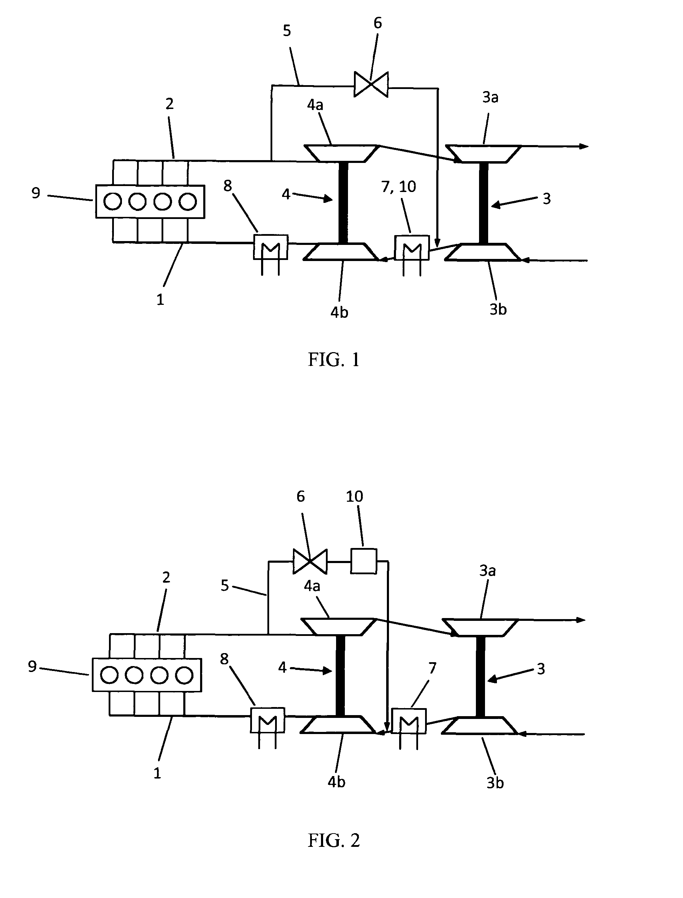

Some embodiments of the present invention are now described with reference to the accompanying drawings. According to an embodiment of the present invention, as shown in Fig. 1, the engine comprises an air intake duct 1, an exhaust gas duct 2, a first, low-pressure turbocharger 3 and a second, high-pressure turbocharger 4. Both turbochargers comprise a turbine 3a, 4a that is located in the exhaust gas duct 2, and a compressor 3b, 4b that is located in the air intake duct 1. With the air intake duct 1 is meant here the whole duct from the air intake openings to the cylinders of the engine. Similarly, with the exhaust gas duct 2 is meant here the whole duct from the cylinders to the point where the exhaust gas is released in the air.

In Fig. 1, there are shown four cylinders arranged inline, but it is clear that the number of cylinders could be different and/or the cylinders could be arranged some other way, e.g. in V-configuration. The invention is especially suitable for use in connection with large diesel engines, the expression referring to such engines that are used, for example, as main propulsion engines or auxiliary engines in ships, or in power plants for the production of electricity and/or heat. The invention is particularly advantageous when used with engines that are operated on heavy fuel oil. However, the invention could also be used in connection with other types of internal combustion engines.

When the exhaust gas leaves the cylinder block 9, it goes through the exhaust gas duct 2. Major part of the exhaust gas goes first through the turbine 4a of the second turbocharger 4 and continues then through the turbine 3a of the first turbocharger 3. After leaving the turbine 3a of the first turbocharger 3, the exhaust gas may be released in the air, but preferably it goes through a catalyst device and/or a particulate filter, scrubber or some other suitable exhaust gas cleaning device.

The engine also comprises an exhaust gas recirculation duct 5, which is used to recirculate part of the exhaust gas back to the cylinders 9 of the engine. The exhaust gas recirculation duct has its starting point in the exhaust gas duct 2 upstream from the turbine 4a of the second turbocharger 4 and its end point in the air intake duct 1 between the compressor 3b of the first turbocharger 3 and the compressor 4b of the second turbocharger 4. The exhaust gas recirculation duct 5 is equipped with a control valve 6 that can be used to control the amount of exhaust gas to be recirculated. Since the exhaust pressure is higher than the pressure of the intake air in the air intake duct 1 upstream from the compressor 4b of the second turbocharger 4, no pumps or any arrangements for increasing the exhaust back pressure are needed to introduce the recirculated exhaust gas into the air intake duct 1 and the engine efficiency is thus maximised.

The air intake duct 1 between the compressors 3b, 4b of the first and the second turbochargers 3, 4 comprises a cooler 7 for the intake air and the recirculated exhaust gas. Another cooler 8 is located in the air intake duct 1 downstream from the compressor 4b of the second turbocharger 4.

To remove from the exhaust gas any impurities that could cause fouling of the compressor 4b of the second turbocharger 4 or otherwise be harmful for the functioning of the engine, the recirculated exhaust gas is cleaned in a scrubber 10 before it enters the compressor 4b of the second turbocharger 4. In the embodiment shown in Fig. 1, the scrubber is integrated with the cooler 7.

The embodiment of the present invention shown in Fig. 2 differs from the embodiment of Fig. 1 in the placement of the scrubber 10. In the embodiment shown in Fig. 2, the scrubber 10 is located in the exhaust gas recirculation duct 5 downstream from the control valve 6. However, it could also be located upstream from the control valve 6. The exhaust gas recirculation duct 5 has its end point downstream from the cooler 7 for charge air, and therefore only the intake air goes through the cooler 7. Also a construction where the exhaust gas recirculation duct 5 has its end point upstream from the cooler 7 would be possible. Such a construction would be preferable in cases where the temperature of the exhaust gas is still high after scrubbing.

Exhaust gas particles from diesel engines are composed of solid particles and volatile compounds. The solid particles are composed of carbon and ash components of fuel and lube oil. The volatile compounds generally consist of some unburned fuel, lube oil and sulphuric acid. In order to reach high efficiency in particle removal, both the solid particles and the volatile compounds have to be removed.

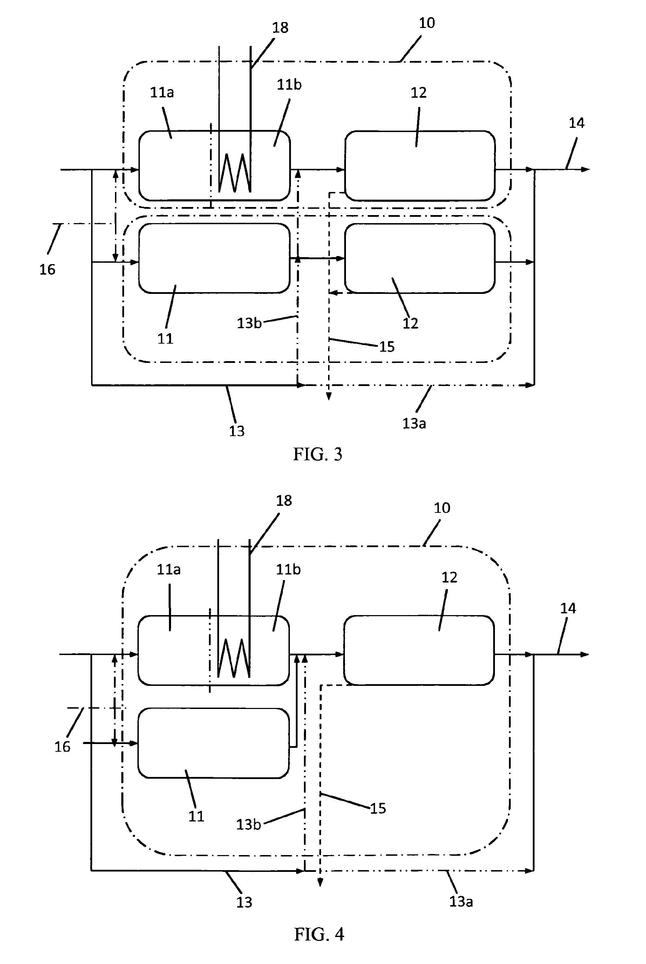

According to an embodiment of the present invention, the scrubber 10 is a wet scrubber, where the exhaust gas is brought to contact with water or other liquid to remove particles and other contaminants from the exhaust gas. Preferably there is provided water supersaturation in the scrubber causing particle growth. The working principle of this kind of a scrubber is now described in more detail with reference to Figs. 3-6.

Supersaturation can be achieved in the scrubber 10 by means of changes in temperature. This is done by providing the scrubber 10 with a higher temperature section and a lower temperature section causing particle growth at the lower temperature section. Difference between the lower temperature and the higher temperature may in theory be 1-50 °C. In practice the difference of 3-7 °C might be sufficient for desired particle growth at the lower temperature section. Maximum value for higher temperature is about 70 °C in order to obtain saturation phenomenon in the exhaust gas. Heat for the higher temperature section may be derived from the exhaust gas or from an external source. The lower temperature can be achieved by a cooler 18 or by adiabatic expansion. The particles can be grown to different sizes for efficient removal.

Another option for achieving supersaturation is to utilise changes in pressure. This is done by providing the scrubber 10 with a low pressure section and a high pressure section causing particle growth at the high pressure section. Isothermic difference between the low pressure and the high pressure should be 50-200 mBar in order to achieve sufficient particle growth. These pressure values are strongly dependent on the temperature of the exhaust gas. The required pressure increase can be achieved e.g. by means of a pressure pump.

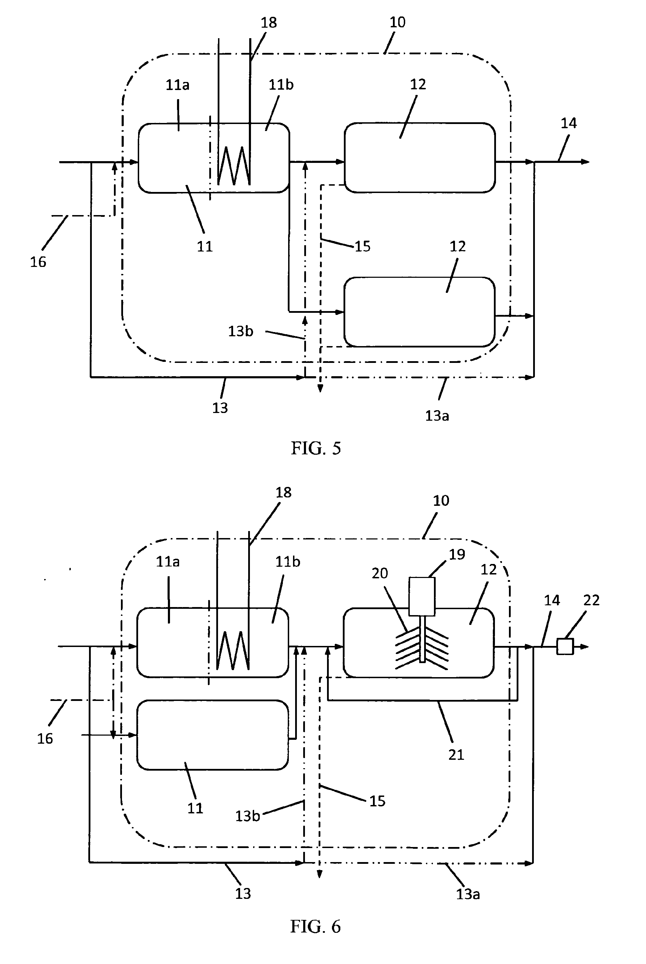

The scrubber 10 advantageously comprises two parts, a first part 11 for particle growth and a second part 12 for particle removal. In this way the first part 11 for particle growth can be provided with the higher temperature section/low pressure section 11 a and the lower temperature section/high pressure section 11b. The second part 12 can advantageously be a centrifugal mist separator. The principle of the centrifugal mist separator is illustrated in Fig. 6.

The first part 11 for particle growth is arranged before, i.e. upstream of the second part 12 for particle growth in the direction of the exhaust gas flow. The advantage of having a first part 11 for particle growth and separate second part 12 for particle removal allows for adapting the second part 12 for particle removal to prevailing particle size, i.e. the particle size achieved in the first part 11. The exhaust gas flow is firstly introduced into the first part 11 and then further led to the second part 12.

In such a two-part scrubber, supersaturation is maintained in the first part 11 for particle growth. Line 16 indicates a water supply or water vapour supply to the first part 11. The water vapour is brought to supersaturation by changes in temperature/pressure, whereby particle growth commences in the first part 11.

Preferably all particles are grown to a given desired particle size. Particles can also be grown to different sizes. In order to initiate required particle growth there is sufficiently long residence time of the exhaust gas in the scrubber, i.e. in the first part 11 of a two-part scrubber 10. Consequently, a desired given particle growth can be achieved by keeping the residence time long enough. Residence time of the exhaust gas in the scrubber 10 can be adjusted by changing the flow rate in the first part 11. This can be achieved by guiding portion of the exhaust gas pass the first part 11 and/or by increasing the number of first part 11 units.

Grown particles can also be mixed with un-grown particles in order to enhance coagulation and consequently to provide for optimal removal. Optimal removal is achieved by matching particle growth in the first part 11 to particle removal efficiency in the second part 12. Particles of a size smaller than optimal or adequate removal capability of the second part 12 are grown in first part 11. Smaller particles are grown faster than larger ones in water supersaturation that is provided in the scrubber 10; therefore it is possible to increase the amount of particles having the size within the range removal capability of the second part 12. Preferably the amount of particles having the size of 0.1-1.0 µm is increased in the first part 11 and more preferably the amount of particles having the size of 0.3-0.8 µm is increased in the first part 11. This has an advantage in that devices for the second part 12 for removal can be selected more advantageously in view of cost, size, availability etc.

Depending on the degree of particle cleaning requirement, the number of scrubbers 10 as well as first parts 11 and second parts 12 may vary. They can e.g. be arranged in parallel, whereby an exhaust gas flow or a part of an exhaust gas flow can be introduced to the/each scrubber 10 in order to achieve a required degree of particle cleaning. The cleaned exhaust gas flow or parts of the cleaned exhaust gas flows can be combined with each other, or even with an un-cleaned exhaust gas flow, depending on the desired degree of particle cleaning.

Figures 3-6 describe some alternative scrubber arrangements.

In Fig. 3 the recirculated exhaust gas is firstly led to the first part 11 and subsequently to the second part 12 of the scrubber. Line 13 indicates a by-pass flow, with respect to the scrubber, of the exhaust gas flow. In this arrangement there are two first parts 11 and two second parts 12. Portion of the exhaust gas flow is arranged to by-pass the first part 11. Particles that are grown in the first part 11 are mixed with un-grown particles after the second part 12 or before the second part 12 as indicated with reference numbers 13a and 13b, respectively. Broken line 15 from the second part 12 indicates the removal of water including extracted particles. Line 14 indicates the final exhaust gas flow that has been cleaned, and which also may be combined with the by-pass flow 13.

In Fig. 4 the recirculated exhaust gas is firstly led to the first part 11 and subsequently to the second part 12 of the scrubber. Line 13 indicates a by-pass flow, with respect to the scrubber, of the exhaust gas flow. In this arrangement there are two first parts 11 and one second part 12, whereby an arrow line indicates that the exhaust gas from the second first part 11 is led to said one second part 12. Portion of the exhaust gas flow is arranged to by-pass the first part 11. Particles that are grown in the first part 11 are mixed with un-grown particles after the second part 12 or before the second part 12 as indicated with reference numbers 13a and 13b, respectively. Broken line 15 from the second part 12 indicates the removal of water including extracted particles. Line 14 indicates the final exhaust gas flow that has been cleaned, and which also may be combined with the by-pass flow 13.

In Fig. 5 the recirculated exhaust gas is firstly led to the first part 11 and subsequently to the second part 12 of the scrubber. Line 13 indicates a by-pass flow, with respect to the scrubber, of the exhaust gas flow. In this arrangement there is one first part 11 and two second parts 12, whereby an arrow line indicates that the exhaust gas from said one first part 11 is also led to the other second part 12. Portion of the exhaust gas flow is arranged to by-pass the first part 11. Particles that are grown in the first part 11 are mixed with un-grown particles after the second part 12 or before the second part 12 as indicated with reference numbers 13a and 13b, respectively. Broken line 15 from the second part 12 indicates the removal of water including extracted particles. Line 14 indicates the final exhaust gas flow that has been cleaned, and which also may be combined with the by-pass flow 13a.

In Figure 6 the principle of the centrifugal mist separator 12 is illustrated. The centrifugal mist separator 12 comprises a motor 19 which is arranged to rotate a disk stack 20, i.e. rotatable exhaust guiding part. Exhaust gas is guided to the centre of the disk stack 20 and exits between the disks of the disk stack 20. Speed of the exhaust gas flow is increased by rotating the disk stack 20 in the centrifugal mist separator.

Another alternative is a centrifugal mist separator where a motor is arranged to rotate a rotatable exhaust guiding part comprising two co-axial pipes. Exhaust gas is guided between pipes. At least one of the pipes is rotated such that centrifugal forces are applied by a motor.

Residence time of the exhaust gas in the scrubber 10 can therefore also be adjusted by the speed of the motor of the centrifugal mist separator 12. The arrangement further comprises a return line 21 from location after the centrifugal into location between the lower temperature section 11b and the centrifugal mist separator 12. The return line 21 allows recirculation of the exhaust gas from location after the centrifugal into location between the lower temperature section 11b and back to the centrifugal mist separator 12.

The arrangement further comprises device for exhaust gas measurement 22. The speed of the motor 19 of the centrifugal mist separator 12 can be partly or fully controlled based on this exhaust gas measurement 22.

Clearly also a one-part scrubber could be used instead of the arrangements described above.

The invention is not limited to the embodiments described above, but may vary within the scope of the appended claims.

## Claims

1. An arrangement for exhaust gas recirculation and turbocharging for an internal combustion engine, which arrangement comprises an air intake duct (1), an exhaust gas duct (2), a first turbocharger (3) comprising a turbine (3a) being located in the exhaust gas duct (2) and a compressor (3b) being located in the air intake duct (1), a second turbocharger (4) comprising a turbine (4a) being located in the exhaust gas duct (2) upstream from the turbine (3a) of the first turbocharger (3) and a compressor (4b) being located in the air intake duct (1) downstream from the compressor (3a) of the first turbocharger (3), an exhaust gas recirculation duct (5) having its starting point in the exhaust gas duct (2) upstream from the turbine (4a) of the second turbocharger (4) and its end point in the air intake duct (1) between the compressor (3b) of the first turbocharger (3) and the compressor (4b) of the second turbocharger (4), a control valve (6) for controlling the amount of exhaust gas to be recirculated, a cooler (7) for charge air located in the air intake duct (1) between the compressor (3b) of the first turbocharger (3) and the compressor (4b) of the second turbocharger (4), and a scrubber (10) for cleaning the recirculated exhaust gas before said exhaust gas enters the compressor (4b) of the second turbocharger (4), the scrubber utilising water supersaturation to grow the particle size in the exhaust gas, **characterised in that** the arrangement comprises a centrifugal mist separator (12) for particle removal.

2. An arrangement according to claim 1, **characterised in that** also the recirculated exhaust gas goes through the cooler (7) for charge air.

3. An arrangement according to claim 1 or 2, **characterised in that** the scrubber (10) is integrated with the cooler (7) for charge air and recirculated exhaust gas.

4. An arrangement according to claim 1 or 2, **characterised in that** the control (6) valve is located in the exhaust gas recirculation duct (5) and that the scrubber (10) is located in said duct (5) downstream from the control valve (6).

5. An arrangement according to any of the preceding claims, **characterised in that** the scrubber (10) comprises a higher temperature section (11a) and a lower temperature section (11b), and that the particle size growth occurs in the lower temperature section (11b), and that the scrubber (10) comprises means for removal of grown particles.

6. An arrangement according to any of claims 1-4, **characterised in that** the scrubber (10) comprises a low pressure section (11a) and a high pressure section (11b), and that the particle size growth occurs in the high pressure section (11b), and that the scrubber (10) comprises means for removal of grown particles.

7. An arrangement according to claim 5, **characterised in that** portion of the exhaust gas flow is arranged to by-pass the lower temperature section (11b).

8. An arrangement according to claim 6, **characterised in that** portion of the exhaust gas flow is arranged to by-pass the high pressure section (11b).

9. An arrangement according to any of claims 5-8, **characterised in that** the scrubber (10) comprises means for adjusting the residence time of the exhaust gas in the scrubber (10).

10. An arrangement according to any of claims 5-9, **characterised in that** the scrubber (10) comprises at least one first part (11) for particle growth and at least one second part (12) for particle removal, and that the at least one first part (11) is arranged before the at least one second part (12) in the direction of the exhaust gas flow.

11. An arrangement according to claim 10, **characterised in that** the first part (11) is provided with the higher temperature section (11a) and the lower temperature section (11b).

12. An arrangement according to claim 10, **characterised in that** the first part (11) is provided with the low pressure section (11a) and the high pressure section (11b).

13. An arrangement according to any of claims 10-12, **characterised in that** the second part is a centrifugal mist separator (12).

14. An arrangement according to claim 13, **characterised in that** the centrifugal mist separator (12) comprises a motor (19) arranged to rotate a disk stack (20).

15. An arrangement according to claim 14, **characterised in that** the arrangement further comprises a device for exhaust gas measurement (22), and speed of the motor (19) of the centrifugal mist separator (12) is controllable based on this exhaust gas measurement.

16. An arrangement according to any of claims 13-15, **characterised in that** the arrangement further comprises a return line (21) from location after the centrifugal mist separator (12) into location between the lower temperature section (11b) and the centrifugal mist separator (12).

17. A method for exhaust gas recirculation and turbocharging for an internal combustion engine, which engine comprises a first turbocharger (3) and a second turbocharger (4) connected in series, which method comprises the steps of directing part of the exhaust gas through the turbine (4a) of the second turbocharger (4) and the turbine (3a) of the first turbocharger (3) located downstream from the turbine (4a) of the second turbocharger (4), taking part of the exhaust gas stream upstream from the turbine (4a) of the second turbocharger (4) and recirculating it through the compressor (4b) of the second turbocharger (4) back to the cylinders (9) of the engine, and cleaning the exhaust gas being recirculated in a scrubber (10) by utilising water supersaturation to grow the particle size in the exhaust gas before it is directed into the compressor (4b) of the second turbocharger (4), **characterised in that** a centrifugal mist separator (12) is used for particle removal.

## Patentansprüche

1. Anordnung zur Abgasrückführung und Turboladung für einen Verbrennungsmotor, wobei die Anordnung einen Luftansaugkanal (1), einen Abgaskanal (2), einen ersten Turbolader (3), der eine Turbine (3a), die sich in dem Abgaskanal (2) befindet, und einen Verdichter (3b), der sich in dem Luftansaugkanal (1) befindet, umfasst, einen zweiten Turbolader (4) der eine Turbine (4a), die sich stromaufwärts von der Turbine (3a) des ersten Turboladers (3) in dem Abgaskanal (3) befindet, und einen Verdichter (4b), der sich stromabwärts von dem Verdichter (3b) des ersten Turboladers (3) in dem Luftansaugkanal (1) befindet, umfasst, einen Abgasrückführungskanal (5), dessen Anfangspunkt in dem Abgaskanal (2) stromaufwärts von der Turbine (4a) des zweiten Turboladers (4) liegt, und dessen Endpunkt zwischen dem Verdichter (3b) des ersten Turboladers (3) und dem Verdichter (4b) des zweiten Turboladers (4) in dem Luftansaugkanal (1) liegt, ein Steuerventil (6) zum Steuern der Menge des Abgases, die zurückgeführt werden soll, einen Kühler (7) für die Ladeluft, der sich zwischen dem Verdichter (3b) des ersten Turboladers (3) und dem Verdichter (4b) des zweiten Turboladers (4) in dem Luftansaugkanal (1) befindet, und einen Wäscher (10) zum Reinigen des zurückgeführten Abgases, bevor das Abgas in den Verdichter (4b) des zweiten Turboladers (4) gelangt, wobei der Wäscher eine Wasserübersättigung benutzt, um die Partikelgröße in dem Abgas wachsen zu lassen, umfasst, **dadurch gekennzeichnet, dass** die Anordnung einen Zentrifugalnebelabscheider (12) zur Partikelbeseitigung umfasst.

2. Anordnung nach Anspruch 1, **dadurch gekennzeichnet, dass** das zurückgeführte Abgas durch den Kühler (7) für die Ladeluft verläuft.

3. Anordnung nach Anspruch 1 oder 2, **dadurch gekennzeichnet, dass** der Wäscher (10) einstückig mit dem Kühler (7) für die Ladeluft und das zurückgeführte Abgas ausgeführt ist.

4. Anordnung nach Anspruch 1 oder 2, **dadurch gekennzeichnet, dass** sich das Steuerventil (6) in dem Abgasrückführungskanal (5) befindet, und dass sich der Wäscher (10) stromabwärts von dem Steuerventil (6) in diesem Kanal (5) befindet.

5. Anordnung nach einem der vorhergehenden Ansprüche, **dadurch gekennzeichnet, dass** der Wäscher (10) einen Abschnitt (11a) mit einer höheren Temperatur und einen Abschnitt (11b) mit einer niedrigeren Temperatur umfasst, und dass das Partikelgrößenwachstum in dem Abschnitt (11b) mit einer niedrigeren Temperatur stattfindet, und dass der Wäscher (10) ein Mittel zur Beseitigung gewachsener Partikel umfasst.

6. Anordnung nach einem der Ansprüche 1 bis 4, **dadurch gekennzeichnet, dass** der Wäscher (10) einen Niederdruckabschnitt (11a) und einen Hochdruckabschnitt (11b) umfasst, und dass das Partikelgrößenwachstum in dem Hochdruckabschnitt (11b) stattfindet, und dass der Wäscher (10) ein Mittel zur Beseitigung gewachsener Partikel umfasst.

7. Anordnung nach Anspruch 5, **dadurch gekennzeichnet, dass** ein Teil des Abgasstroms so eingerichtet ist, dass er den Abschnitt (11b) mit einer niedrigeren Temperatur umgeht.

8. Anordnung nach Anspruch 6, **dadurch gekennzeichnet, dass** ein Teil des Abgasstroms so eingerichtet ist, dass er den Hochdruckabschnitt (11b) umgeht.

9. Anordnung nach einem der Ansprüche 5 bis 8, **dadurch gekennzeichnet, dass** der Wäscher (10) ein Mittel zur Regulierung der Aufenthaltszeit des Abgases in dem Wäscher (10) umfasst.

10. Anordnung nach einem der Ansprüche 5 bis 9, **dadurch gekennzeichnet, dass** der Wäscher (10) wenigstens einen ersten Teil (11) für das Partikelwachstum und wenigstens einen zweiten Teil (12) für die Partikelbeseitigung umfasst, und dass der wenigstens eine erste Teil (11) in der Richtung des Abgasstroms vor dem wenigstens einen zweiten Teil (12) angeordnet ist.

11. Anordnung nach Anspruch 10, **dadurch gekennzeichnet, dass** der erste Teil (11) mit dem Abschnitt (11a) mit der höheren Temperatur und dem Abschnitt (11b) mit der niedrigeren Temperatur versehen ist.

12. Anordnung nach Anspruch 10, **dadurch gekennzeichnet, dass** der erste Teil mit dem Niederdruckabschnitt (11a) und dem Hochdruckabschnitt (11b) versehen ist.

13. Anordnung nach einem der Ansprüche 10 bis 12, **dadurch gekennzeichnet, dass** der zweite Teil ein Zentrifugalnebelabscheider (12) ist.

14. Anordnung nach Anspruch 12, **dadurch gekennzeichnet, dass** der Zentrifugalnebelabscheider (12) einen Motor (19) umfasst, der zum Drehen eines Lamellenstapels (20) eingerichtet ist.

15. Anordnung nach Anspruch 14, **dadurch gekennzeichnet, dass** die Anordnung ferner eine Vorrichtung zur Abgasmessung (22) umfasst, und die Geschwindigkeit des Motors (19) des Zentrifugalnebelabscheiders (12) auf Basis dieser Abgasmessung steuerbar ist.

16. Anordnung nach einem der Ansprüche 13 bis 15, **dadurch gekennzeichnet, dass** die Anordnung ferner eine Rückführleitung (21) von einer Stelle nach dem Zentrifugalnebelabscheider (12) an eine Stelle zwischen dem Abschnitt (11b) mit einer niedrigeren Temperatur und dem Zentrifugalnebelabscheider (12) umfasst.

17. Verfahren zur Abgasrückführung und Turboladung für einen Verbrennungsmotor, wobei der Motor einen ersten Turbolader (3) und einen zweiten Turbolader (4), die in Reihe verbunden sind, umfasst, wobei das Verfahren die Schritte des Richtens eines Teils des Abgases durch die Turbine (4a) des zweiten Turboladers (4) und die Turbine (3a) des ersten Turboladers (3), die sich stromabwärts von der Turbine (4a) des zweiten Turboladers (4) befindet, des Entnehmens eines Teils des Abgasstroms stromaufwärts von der Turbine (4a) des zweiten Turboladers (4) und seines Rückführens durch den Verdichter (4b) des zweiten Turboladers (4) zu den Zylindern (9) des Motors, und des Reinigens des zurückgeführten Abgases in einem Wäscher (40) durch Benutzen einer Wasserübersättigung, um die Partikelgröße in dem Abgas anwachsen zu lassen, bevor es in den Verdichter (4b) des zweiten Turboladers (4) gerichtet wird, umfasst, **dadurch gekennzeichnet, dass** für die Partikelbeseitigung ein Zentrifugalnebelabscheider (12) verwendet wird.

## Revendications

1. Dispositif de recirculation des gaz d'échappement et suralimentation pour un moteur à combustion interne, lequel agencement comprend un conduite de prise d'air (1), une conduite de gaz d'échappement (2), un premier turbocompresseur (3) comprenant une turbine (3a) situé dans la conduite de gaz d'échappement (2) et un compresseur (3b) situé dans la conduite de prise d'air (1), un second turbocompresseur (4) comprenant une turbine (4a) située dans la conduite de gaz d'échappement (2) en amont de la turbine (3a) du premier turbocompresseur (3) et un compresseur (4b) étant situé dans la conduite de prise d'air (1) en aval du compresseur (3a) du premier turbocompresseur (3), une conduite de recirculation des gaz d'échappement (5) ayant son point de départ dans la conduite de gaz d'échappement (2) en amont de la turbine (4a) du second turbocompresseur (4) et son point terminal dans la conduite de prise d'air (1) entre le compresseur (3b) du premier turbocompresseur (3) et le compresseur (4b) du second turbocompresseur (4), une soupape de commande (6) pour commander la quantité de gaz d'échappement à recirculer, un refroidisseur (7) pour l'air de suralimentation situé dans la conduite de prise d'air (1) entre le compresseur (3b) du premier turbocompresseur (3) et le compresseur (4b) du second turbocompresseur (4), et un épurateur (10) pour nettoyer les gaz d'échappement recirculé avant que les gaz d'échappement n'entrent dans le compresseur (4b) du second turbocompresseur (4), l'épurateur utilisant la sursaturation de l'eau pour faire croître la taille des particules dans les gaz d'échappement, **caractérisé en ce que** l'agencement comprend un séparateur de brouillard centrifuge (12) pour retirer les particules.

2. Agencement selon la revendication 1, **caractérisé en ce que** les gaz d'échappement recirculés passent également à travers le refroidisseur (7) pour l'air de suralimentation.

3. Agencement selon la revendication 1 ou 2, **caractérisé en ce que** l'épurateur (10) est intégré avec le refroidisseur (7) pour l'air de suralimentation et les gaz d'échappement recirculés.

4. Agencement selon la revendication 1 ou 2, **caractérisé en ce que** la soupape de commande (6) est située dans la conduite de recirculation de gaz d'échappement (5) et que l'épurateur (10) est situé dans ladite conduite (5) en aval de la soupape de commande (6).

5. Agencement selon l'une quelconque des revendications précédentes, **caractérisé en ce que** l'épurateur (10) comprend une section à température plus élevée (11a) et une section à température plus basse (11b), et que la croissance de la taille des particules se produit dans la section à température plus basse (11b), et que l'épurateur (10) comprend un moyen pour retirer les particules qui ont grandi.

6. Agencement selon l'une quelconque des revendications 1 - 4, **caractérisé en ce que** l'épurateur (10) comprend une section basse pression (11a) et une section à haute pression (11b), et que la croissance de la taille des particules se produit dans la section à haute pression (11b), et que l'épurateur (10) comprend un moyen pour retirer les particules qui ont grandi.

7. Agencement selon la revendication 5, **caractérisé en ce qu'**une partie du flux de gaz d'échappement est agencée pour dériver la section à température plus basse (11b).

8. Agencement selon la revendication 6, **caractérisé en ce qu'**une partie du flux de gaz d'échappement est agencée pour dériver la section haute pression (11b).

9. Agencement selon l'une quelconque des revendications 5 - 8, **caractérisé en ce que** l'épurateur (10) comprend un moyen pour ajuster la durée de séjour des gaz d'échappement dans l'épurateur (10).

10. Agencement selon l'une quelconque des revendications 5 - 9, **caractérisé en ce que** l'épurateur (10) comprend au moins une première partie (11) pour la croissance des particules et au moins une seconde partie (12) pour retirer les particules, et **en ce que** l'au moins une première partie (11) est agencée avant l'au moins une seconde partie (12) dans la direction du flux de gaz d'échappement.

11. Agencement selon la revendication 10, **caractérisé en ce que** la première partie (11) est dotée de la section à température plus élevée (11a) et de la section à température plus basse (11b).

12. Agencement selon la revendication 10, **caractérisé en ce que** la première partie (11) est dotée de la section basse pression (11a) et de la section haute pression (11b).

13. Agencement selon l'une quelconque des revendications 10 - 12, **caractérisé en ce que** la seconde partie est un séparateur de brouillard centrifuge (12).

14. Agencement selon la revendication 13, **caractérisé en ce que** le séparateur de brouillard centrifuge (12) comprend un moteur (19) agencé pour faire tourner une pile de disques (20).

15. Agencement selon la revendication 14, **caractérisé en ce que** l'agencement comprend en outre un dispositif pour mesurer les gaz d'échappement (22), et la vitesse du moteur (19) du séparateur de brouillard centrifuge (12) peut être comandée en se basant sur cette mesure de gaz d'échappement.

16. Agencement selon l'une quelconque des revendications 13 - 15, **caractérisé en ce que** l'agencement comprend en outre une ligne de retour (21) de l'emplacement après le séparateur de brouillard centrifuge (12) dans l'emplacement entre la section à température plus basse (11b) et le séparateur de brouillard centrifuge (12).

17. Procédé de recirculation des gaz d'échappement et de suralimentation pour un moteur à combustion interne, lequel moteur comprend un premier turbocompresseur (3) et un second turbocompresseur (4) reliés en série, lequel procédé comprend les étapes de diriger une partie des gaz d'échappement à travers la turbine (4a) du second turbocompresseur (4) et la turbine (3a) du premier turbocompresseur (3) située en aval de la turbine (4a) du second turbocompresseur (4), prenant une partie de flux de gaz d'échappement en amont de la turbine (4a) du second turbocompresseur (4) et la faisant recirculer à travers le compresseur (4b) du second turbocompresseur (4) en retour vers les cylindres (9) du moteur, et de nettoyer les gaz d'échappement qui sont en cours de recirculation dans un épurateur (10) en utilisant la sursaturation de l'eau pour faire croître la taille des particules dans les gaz d'échappement avant qu'ils ne soient dirigés dans le compresseur (4b) du second turbocompresseur (4), **caractérisé en ce qu'**un séparateur de brouillard centrifuge (12) est employé pour retirer les particules.
